# EUROPEAN PATENT APPLICATION

(11) **EP 2 916 419 A1**
(43) Date of publication of application: **09.09.2015**
(21) Application number: 14000763.4
(22) Date of filing: 04.03.2014
(51) Int. Cl.: H02J 7/00, B63J 3/00, H02J 9/06

(54) **Power system of a floating vessel**

(71) Applicant: Siemens Aktiengesellschaft, 80333 München (DE)
(72) Inventor: Van Ravens, Rune, 1480 Slattum (NO)

(57) **Abstract**

A power system of a floating vessel, in particular an offshore vessel, is provided. An AC power distribution bus has plural bus sections, wherein the plural bus sections are connectable by means of bus ties, wherein bus tie breakers are configured to be operable so as to electrically isolate each bus section from the remaining bus sections. The power system is adapted to be segregated into at least two, preferably at least three power system sections each comprising a bus section, a thruster drive connected to the bus section and electric energy storage device. Each electric energy storage device is configured and connected so as to be capable of powering the thruster drive of the respective power system section for a predetermined amount of time.

## Description

### Field of the invention

The present invention relates to a power system for a floating vessel, in particular for an offshore vessel.

### Background

Some types of floating vessels, such as drill ships, floating platforms, drilling semi-submersibles, FPSOs (floating production storage and off-loading vessels) and the like use electric propulsion systems in which propellers are driven by electrical motors. Examples include azimuth thrusters of a vessel, which comprise an electric motor arranged in a pot, the electric motor being directly connected to the propeller. Electricity is generally produced on board of such vessels, for example by one or more generators coupled to a diesel engine or gas turbine, and transmitted by an onboard power grid to the electric motor for driving the thruster. Such vessel can comprise further electric drives that require electrical energy for operation, including anchor winch drives, drives of drilling applications, drives of drawworks, and the like, and can furthermore comprise electric motors operating auxiliaries.

Marine vessels employing such types of electric drives generally comprise an onboard power plant, which produces the required electrical energy for example by the above mentioned diesel engine or gas turbine coupled to a generator. Such arrangements provide the main power supply for the vessel. If the power plant experiences a blackout, or if there is a fault in the onboard power grid or in a component coupled thereto, the vessel will lose its main power supply.

The electric motors, in particular of the thrusters, can be driven by a variable frequency drive for enabling speed control. If a blackout of the main power supply occurs, these frequency converters will generally trip on under-voltage, and will be out of service for the duration of the blackout. Furthermore, after the onboard power plant resumes operation, the variable frequency drives require a certain startup time to come back online and to start supplying electric power to the electric motors. Restarting the variable frequency drive generally also includes the starting of all auxiliary devices, such as cooling pumps, fans, lubrication pumps and so on. The duration for restarting a variable frequency drive can be significant.

Although the power plants of such vessels are generally designed to restore electric power as fast as possible, and the electric drives are designed to restart as fast as possible, there can be a significant delay before the electric drives can continue to operate. Long delays are undesirable in particular for marine vessels having electric propulsion systems, as inoperability of the thruster drives may lead to a loss of position and maneuverability. Vessels operating dynamic positioning systems of higher classifications, such as equipment class 2 (DP2, e.g. DYNPOS-AUTR) or equipment class 3 (DP3, e.g. DYNPOS-AUTRO) and the like (see IMO MSC/Circ.645, "Guidelines for vessels with dynamic positioning systems"), are thus required to have a certain redundancy in the power generation systems. The power generation system may for example be split into several separate and independent subsystems. For DYNPOS-AUTRO classification or DPS3-classification, the main bus bar is for example split into 2, 3 or more different sections, each being connected to a generator. Bus tie breakers provided between the sections of the main power distribution bus should be open during class 3 operation so that one section is not affected by a blackout in another section.

This effort is generally made since the time that the thrusters require for coming back online after a blackout is too long, one of the reasons being the startup time required for the frequency converters. Operating the vessel with split sections of the power system makes operation rather ineffective and leads to a higher fuel consumption and thus increased operating costs. More importantly, the thrusters and the power sources, such as diesel engines or gas turbines, need to be provided with significant spare capacity so that the vessel remains operable if a power system section is lost. As an example, if the power system can be split into 2 or 3 sections, 50% or 33% spare capacity need to be provided. In particular DP2 or DP3 vessels need to provide this 'spin-ning reserves', for example running diesel engines ready to take on load rapidly. This causes additional wear and tear on the machinery. It further results in increased fuel consumption, high emissions and high maintenance costs.

### Summary

Accordingly, there is a need to mitigate at least some of the drawbacks mentioned above.

This need is met by the features of the independent claims. The dependent claims describe embodiments of the invention.

According to an embodiment of the invention, a power system of a floating vessel, in particular an offshore vessel, is provided. The power system comprises an AC power distribution bus comprising plural bus sections, wherein the plural bus sections are connectable by means of bus ties, wherein bus tie breakers are provided and configured to be operable so as to electrically isolate each bus section from the remaining bus sections. The power system is adapted to be segregated into at least two, preferably at least three power system sections each comprising a bus section, a thruster drive connected to the bus section and an electric energy storage device. Each electric energy storage device is configured and connected so as to be capable of powering the thruster drive of the respective power system section for a predetermined amount of time.

By means of the bus ties, the bus sections may be connectable in a ring configuration.

Accordingly, backup power for the thruster drives may be provided by means of the electric energy storage devices. Redundancy and thus the safety of the power system may be increased this way. Furthermore, spare capacity for the electric power can be provided this way. Accordingly, the spare capacity which needs to be provided by diesel engines or gas turbines in a conventional power system can be reduced, thus reducing emissions, fuel and maintenance costs. Further conventional power sources in the system, such as generators coupled to diesel engines, can be utilized with higher loading, i.e. they do not need to be operated only at a fraction of the available capacity. Furthermore, the number of conventional power sources in the power system may be reduced. By reducing the number of running conventional power sources or even providing fewer conventional power sources, CAPEX and/or OPEX may be reduced.

Powering the thruster drive is performed such that propulsion can be provided by the thruster, i.e. the thruster drive is not only kept in an operable state like in ridethrough systems, but actually provides propulsion when powered from the electric energy storage device.

Each power system section can comprise one, two or more bus sections. Further power system sections may be provided in addition which do not comprise an electric energy storage device. Some but not all power system sections may comprise a generator connected to a bus section. As an example, some power system sections may comprise only an electric energy storage device as a power source, some power system sections may only comprise one or more generators as a power source, and some power system sections may comprise both an electric energy storage device and a generator.

In an embodiment, the electric energy storage device is configured to be capable of powering the thruster drive of the respective power system section for at least one minute, preferably at least two minutes, more preferably at least 4 minutes.

In an embodiment, the electric energy storage device is configured to be capable of powering the thruster drive of the respective power system section for at least an amount of time required for disconnecting drilling equipment or hydrocarbon production equipment of the floating vessel from a subsea well. Accordingly, the position of the vessel may be kept while disconnecting the drilling equipment or the production equipment, thus increasing safety against environmental pollution.

In an embodiment, the electric energy storage device is a DC storage unit, in particular a battery or a capacitor bank, for example a lithium polymer battery.

In an embodiment, the plural bus sections of the AC power distribution bus comprise at least two bus sections of a first type, wherein at least one generator and at least one load comprising an electrical drive, in particular a thruster drive, a drilling drive or an anchor winch drive, are connected to each bus section of the first type. The plural bus sections further comprise at least two bus sections of a second type, wherein at least one electric energy storage device and at least one load comprising an electrical drive, in particular a thruster drive, a drilling drive or an anchor winch drive, are connected to each bus section of the second type.

Different configurations of the power system are conceivable. In some configurations, each bus section of the first type and of the second type are provided in a different power system section. In other configurations, each power system section comprises at least a bus section of the first type and a bus section of the second type (and the respective components connected thereto).

Connected in this sense may mean directly connected, i.e. without needing to go through bus ties and a further bus section, yet the connection may comprise intervening elements, such as transformers, converters, circuit breakers and the like.

In an embodiment, the bus sections of the second type are not connected to any further power source other then said energy storage device when the bus ties are open. Accordingly, a bus section to which only a power source in form of the electric energy storage device is connected can be isolated from the remaining power system.

In an embodiment, to each bus section of the second type, at least a thruster drive is connected. Accordingly, such thruster drive can remain operable even if the power system sections and thus the bus sections are separated in case of a fault or the loss of one or more power system sections.

In an embodiment, the electric energy storage device is connected to the respective bus section of the AC power distribution bus at least via a converter providing DC voltage for charging the energy storage unit and converting DC voltage supplied by the energy storage device to AC voltage for the AC power distribution bus.

In an embodiment, the electric energy storage device is connected to the respective bus section of the AC power distribution bus at least via a voltage transformer (in particular AC transformer) providing a voltage transformation for charging the electric energy storage device and for supplying electric power from the electric energy storage device to the AC power distribution bus.

In an embodiment, the power system comprises in each power system section an AC transformer connected to the bus section, wherein the AC transformer has an auxiliary winding, wherein the electric energy storage device is connected to the auxiliary winding of the AC transformer. By not directly connecting the electric energy storage device to the bus section of the AC power distribution bus, the power management of the power system may be facilitated.

In an embodiment, the thruster drive comprises a converter having a DC bus, wherein the electric energy storage device is connected to the DC bus of the converter. By not directly connecting the electric energy storage device to the bus section of the AC power distribution bus, the power management of the power system may be facilitated.

In an embodiment, in each power system section, the energy storage device is connected to the bus section to which the thruster drive is connected.

In an embodiment, for each bus section of the AC power distribution bus, a separate power system section is provided. Such configuration allows a separation of the power system into plural isolated power subsystems, thus increasing the reliability of the power system. This is particularly suitable for class 3 (DP3) vessels. Separation can occur by opening the bus tie breakers between the bus sections.

In an embodiment, each power system section comprises at least a bus section of the first type and a bus section of the second type. Accordingly, in each power system section, at least one generator and one electric power storage device may be provided. This reduces the complexity of the power system. Such configuration may be particularly suitable for class 2 (DP2) vessels.

In an embodiment, the power system sections are spatially separate. The power system sections may be provided in different compartments of the floating vessel. In particular, the power system sections may be separated by fire proof walls. Accordingly, if a section or compartment is flooded of is damaged by fire, the remaining power system sections can remain operable.

The features of the embodiments mentioned above and those yet to be explained below can be combined with each other unless noted to the contrary.

### Brief description of the drawings

The foregoing and other features and advantages of the invention will become further apparent from the following detailed description read in conjunction with the accompanying drawings. In the drawings, like reference numerals refer to like elements.
Figure 1 is a schematic drawing showing a power system according to an embodiment of the invention.
Figure 2 is a schematic drawing showing a power system according to a further embodiment of the invention.
Figure 3 is a schematic drawing showing the coupling of a energy storage unit according to an embodiment of the invention.
Figure 4 is a schematic drawing showing the coupling of a energy storage unit according to a further embodiment of the invention.
Figure 5 is a schematic drawing showing the coupling of a energy storage unit according to a further embodiment of the invention.

### Detailed description

In the following, embodiments of the invention will be described in detail with reference to the accompanying drawings. It is to be understood that the following description of the embodiments is given only for the purpose of illustration and is not to be taken in a limiting sense.

The drawings are to be regarded as being schematic representations only, and elements in the drawings are not necessarily to scale with each other. Rather, the representation of the various elements is chosen such that their function and general purpose become apparent to a person skilled in the art.

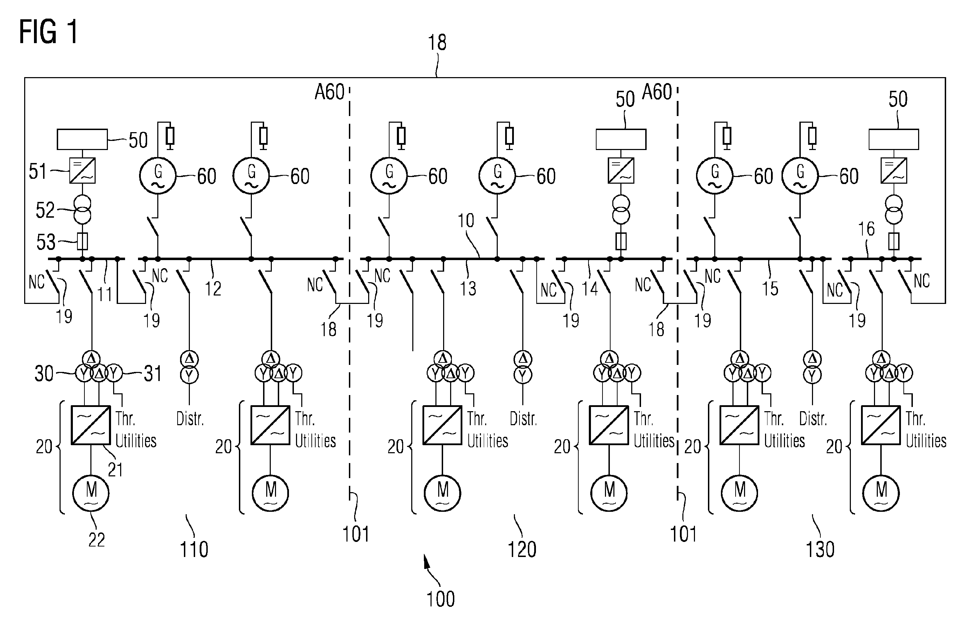

Figure 1 shows a power system 100 according to an embodiment that can be segregated into the three power system sections 110, 120 and 130. The power system 100 comprises a AC power distribution bus 10 which can be separated into isolated bus sections 11, 12, 13, 14, 15 and 16 by means of breakers 19. By means of the bus ties 18, the bus sections can be connected in a ring configuration.

In the embodiment of figure 1, each power system section comprises a first type of bus sections 12, 13, 15 to which generators 60 are coupled. One, two or more generators 60 can be coupled to each of these bus sections. Each power system section 110, 102, 130 further comprises a second type of bus sections 11, 14, 16 to which an electric energy storage device 50 is coupled. Furthermore, to each bus section, a thruster drive 20 is coupled, which includes in the present example a frequency converter (e.g. variable frequency drive VSD) 21 and an AC electric motor 22 of the respective thruster. The thruster is powered by the thruster drive 20. The thruster comprises a propeller by means of which the floating vessel on which power system 100 is installed is propelled. The vessel is in particular a dynamically positioned vessel, e.g. a drilling vessel or a production vessel for hydrocarbon production. Examples include drill ships, semi-submersibles or the like.

The thruster drives 20 are connected via AC transformers 30 to the AC power distribution bus 10 so as to provide the correct voltage level to the drives. An auxiliary winding 31 on the transformer 30 can be provided for powering thruster utilities.

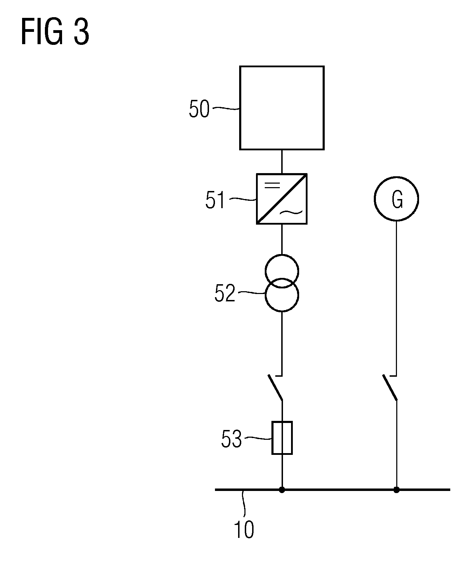

The electric energy storage device 50 is connected to the respective bus section 11, 14, 16 via a converter 51, a transformer 52 and a protective device 53, e.g. a fuse or a circuit breaker. This is in detail illustrated in figure 3. The converter 51 can operate as a inverter when drawing power from the storage device 50, or as a rectifier for charging the storage device 50. The transformer 52 is configured to provide the required voltage level to the AC power distribution bus 10 when discharging storage device 50 and to the converter 51 when charging the storage device 50.

The power system 100 is configured such that in normal operation, the bus tie breakers 19 are closed and the bus sections of power distribution bus 10 are connected. If in such mode of operation, a failure or short circuit occurs in a power system section, or such power system section is flooded or suffers from fire, the bus tie breakers 19 can be opened and the power system sections 110, 120 and 130 can be isolated from each other. The thrusters of the failed power system section may become inoperable. The thrusters of the remaining power system sections can now have to keep the floating vessel in position and may accordingly require an increased supply of electric power. This can be achieved by making use of power supplies by the electrical energy storage devices 50 of the respective power system section. Thus, less spare capacity for electric power needs to be provided by conventional power sources, e.g. by generators coupled to diesel engines or gas turbine. Accordingly, the number of generators which are running or are provided in each power system section can be reduced.

Furthermore, in each power system section 110, 120, 130, the power distribution bus may be separated into different bus sections by means of the circuit breakers 19, e.g. the above mentioned first and second type of bus sections. Further redundancy can thus be achieved, since if there is for example a fault on bus section 12, the bus section 11 can remain operable. Since also a thruster drive is coupled to the bus section 11, the thruster can continue operation.

In the power system 100 of figure 1, each power system section comprises such bus section of the second type. Accordingly, the respective three thruster drives can be operated on the power supplied by the respective electric energy storage devices 50. With three operable thrusters, the vessel is generally capable to maintain its position. With the power system of figure 1, even if all generators should fail, at least three thrusters remain operational from electric power provided by the storage devices 50. The vessel can thus maintain position. A significant increase in the vessels safety and the power systems reliability may thus be achieved.

The electric energy storage devices 50 can be provided by batteries, capacitor banks or the like. They are configured to maintain operation of the respective thrusters for a certain predetermined minimum amount of time. This amount of time is preferably selected in dependence on the type of vessel and the time required to detach e.g. drilling equipment, production equipment or the like so that the vessel is allowed to leave its position. The electric energy storage devices 50 can for example be configured to enable a thruster operation for at least 1 minute, at least 2 minutes or even at least 4 minutes.

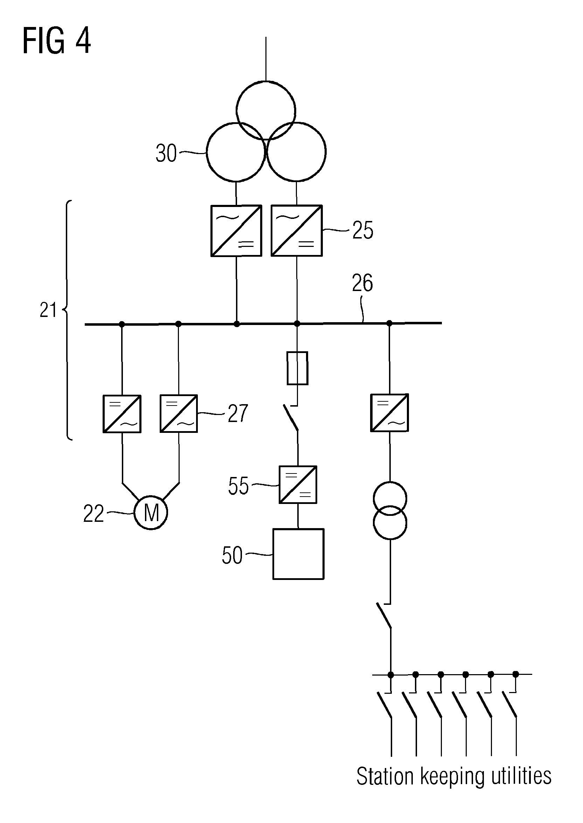

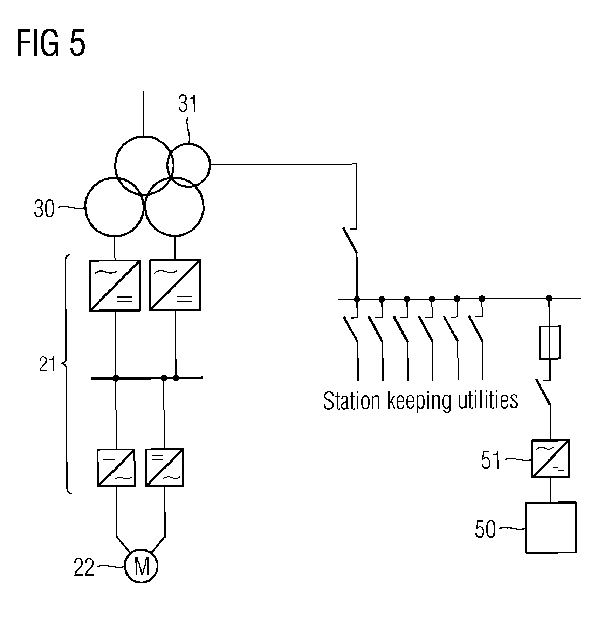

Further possibilities of coupling the electric energy storage device 50 to the thruster drive in the respective power system section are illustrated in figures 4 and 5. Figure 4 shows that the storage device 50 can be coupled via e.g. a bi-directional step up / step down converter 55 to a DC-bus 26 of the frequency converter 21. By using such converter 55, the voltage required by the electric energy storage device may be adapted to the voltage at which the direct current (DC) bus is operated. The converter 55 may for example be a bi-directional step-up or step-down chopper.

The frequency converter 21 comprises the rectifiers 25, the DC-bus 26 and the inverters 27, to which the AC motor 22 is connected. As indicated, further loads, such as station keeping utilities, can be connected to the DC bus 26.

In the example of figure 5, an auxiliary winding 31 is provided on the AC transformer 30 the main function of which is the powering of the thruster motor 22. From the auxiliary winding 31, further loads, such as station keeping utilities can be powered. The electric energy storage device 50 can be connected to such auxiliary winding 31 via the converter 51, which can again be operated as inverter (discharging) or rectifier (charging).

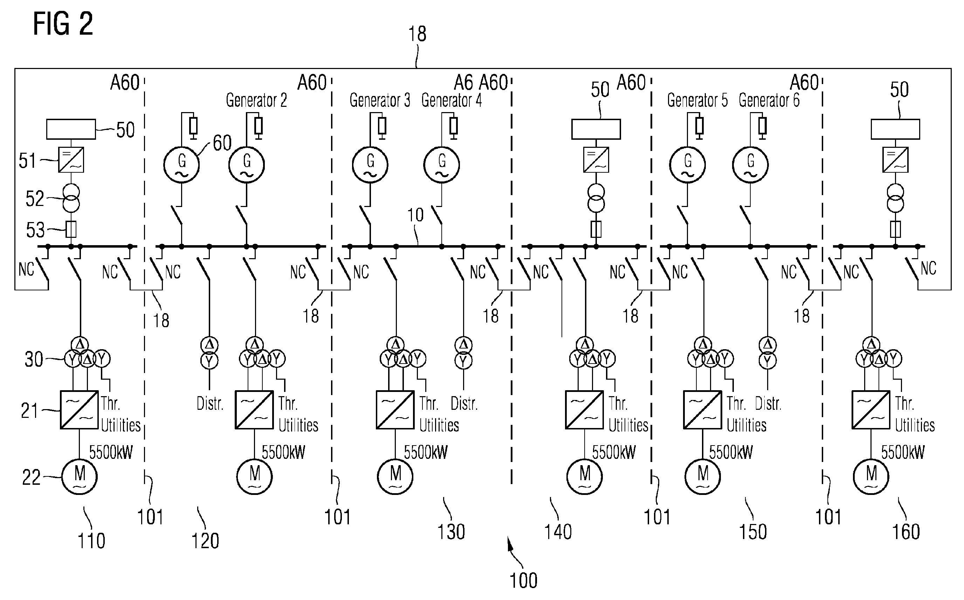

Figure 2 illustrates a further embodiment of a power system 100 of the present invention. Since this embodiment is a modification of the embodiment of figure 1, the explanations given above are equally applicable.

In the embodiment of figure 2, the power system 100 is separable into further power system sections 110, 120, 130, 140, 150, and 160. Each power system section can be provided in a separate compartment or room on the floating vessel, so as to ensure a high degree of redundancy and reliability. Further bus ties 18 with respective bus tie breakers are provided to allow the connection of the bus sections of the plural power system sections. As can be seen, some power system sections (e.g. 110, 140, 160) only comprise a bus section of the second type to which only a electric power storage device 50 is connected. Other power system sections (e.g. 120, 130, 150) comprise only a bus sections of the first type to which generators 60 are connected. Accordingly, it becomes possible to both spatially and electrically isolate the bus sections from the power system to which the electric power storage devices 50 are coupled. This provided a significant increase in safety, since even if all generator rooms suffer from fire, the power system can still operate at least three thrusters from the power stored in the electric power storage devices 50 and thus remains maneuverable.

The following summarizes the advantages provided by embodiments of the present invention. Embodiments utilize passive, stored energy power sources, adding redundancy by connecting these in simple, compact and cost efficient sections. The stored energy sources act as passive spare capacity rather than e.g. running diesel engines. Different types of energy storage media may be used, e.g. batteries. By also connecting a thruster drive to each power system section or even each bus section having a electric power storage device 50, additional redundancy is achieved for the thrusters. A passive stored energy source only requires minimum auxiliary systems which reduce their cost and may allow additional sections/compartments to be provided on the vessel which comprise these parts of the power system. Thereby, the required spare capacity of the sections with conventional power sources may be reduced, hence also the installed capacity of the conventional power sources. The energy storage units may be connected and controlled with the electrical system in various ways, e.g. directly to a bus section, for example to the main switchboard of the power system; directly to thruster drives; through an auxiliary winding. In case of a total black-out on the vessel, the bus ties may be opened, limiting the power from the electric energy storage devices to be supplied to the dedicated consumers, e.g to the thrusters. Optimal flexibility and utilization of the energy storage may be achieved by operating the power system with all bus tie breakers closed. When the required spare capacity is achieved with the passive electric energy storage devices, the conventional power sources (e.g diesel engines) can be utilized with higher loading - thus reducing emissions, fuel and maintenance costs. In many operational conditions, fewer conventional power sources may be required to run, thereby reducing emissions, fuel consumption and maintenance costs. The highest savings might be achieved if the rating or quantity of conventional power sources may be reduced, which depends on the maximum total load required.

## Claims

1. A power system of a floating vessel, in particular an offshore vessel, comprising an AC power distribution bus comprising plural bus sections, wherein the plural bus sections are connectable by means of bus ties, wherein bus tie breakers are configured to be operable so as to electrically isolate each bus section from the remaining bus sections, wherein the power system is adapted to be segregated into at least two, preferably at least three power system sections each comprising a bus section, a thruster drive connected to the bus section and an electric energy storage device, wherein each electric energy storage device is configured and connected so as to be capable of powering the thruster drive of the respective power system section for a predetermined amount of time.

2. The power system according to claim 1, wherein the electric energy storage device is configured to be capable of powering the thruster drive of the respective power system section for at least one minute, preferably at least two minutes, more preferably at least 4 minutes.

3. The power system according to claim 1 or 2, wherein the electric energy storage device is configured to be capable of powering the thruster drive of the respective power system section for at least an amount of time required for disconnecting drilling equipment or hydrocarbon production equipment of the floating vessel from an offshore well.

4. The power system according to any of the preceding claims, wherein the electric energy storage device is a DC storage unit, in particular a battery or a capacitor bank, for example a lithium polymer battery.

5. The power system according to any of the preceding claims, wherein the plural bus sections of the AC power distribution bus comprise
- at least two bus sections of a first type, wherein at least one generator and at least one load comprising an electrical drive, in particular a thruster drive, a drilling drive or an anchor winch drive, are connected to each bus section of the first type,
- at least two bus sections of a second type, wherein at least one electric energy storage device and at least one load comprising an electrical drive, in particular a thruster drive, a drilling drive or an anchor winch drive, are connected to each bus section of the second type.

6. The power system according to claim 5, wherein the bus sections of the second type are not connected to any further power source other then said energy storage device when the bus tie breakers are open.

7. The power system according to claim 5 or 6, wherein to each bus section of the second type, at least a thruster drive is connected.

8. The power system according to any of the preceding claims, wherein the electric energy storage device is connected to the bus section of the AC power distribution bus at least via an converter providing DC voltage for charging the energy storage unit and converting DC voltage supplied by the energy storage device to AC voltage for the AC power distribution bus.

9. The power system according to any of the preceding claims, wherein the electric energy storage device is connected to the bus section of the AC power distribution bus at least via a voltage transformer providing a voltage transformation for charging the electric energy storage device and for supplying electric power from the electric energy storage device to the AC power distribution bus.

10. The power system according to any of the preceding claims, wherein the power system comprises in each power system section an AC transformer connected to the bus section, wherein the AC transformer has an auxiliary winding, wherein the electric energy storage device is connected to the auxiliary winding of the AC transformer.

11. The power system according to any of claims 1-9, wherein the thruster drive comprises a converter having a DC bus, wherein the electric energy storage device is connected to the DC bus of the converter.

12. The power system according to any of claims 1-9, wherein in each power system section, the energy storage device is connected to the bus section to which the thruster drive is connected.

13. The power system according to any of the preceding claims, wherein for each bus section of the AC power distribution bus, a separate power system section is provided.

14. The power system according to any of claims 5-7, wherein each power system section comprises at least a bus section of the first type and a bus section of the second type.

15. The power system according to any of the preceding claims, wherein the power system sections are spatially separate, in particular wherein the power system sections are provided in spatially separate compartments of the floating vessel.
